(19) **Europäisches Patentamt / European Patent Office / Office européen des brevets**

(11) **EP 3 239 699 B1**

(12) # EUROPEAN PATENT SPECIFICATION

(45) Date of publication and mention
of the grant of the patent:
**13.05.2026   Bulletin 2026/20**

(21) Application number: **17163493.4**

(22) Date of filing: **29.03.2017**

(51) International Patent Classification (IPC):
**G01N 23/04** *(2018.01)*

(52) Cooperative Patent Classification (CPC):
**G01N 23/203; G01V 5/222;** G01N 2223/423

(54) **BACKSCATTER-IMAGING BASED INSPECTING SYSTEM AND METHOD**

RÜCKSTREUUNGSBILDGEBUNGSVORRICHTUNGSBASIERTES PRÜFSYSTEM UND VERFAHREN

SYSTÈME ET PROCÉDÉ D'INSPECTION À BASE D'IMAGERIE DE RÉTRODIFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **29.04.2016   CN 201610283915**

(43) Date of publication of application:
**01.11.2017   Bulletin 2017/44**

(73) Proprietor: **Nuctech Company Limited
TongFang Building,
Shuangqinglu,
Haidian District
Beijing 100084 (CN)**

(72) Inventors:
• **LI, Yuanjing
Beijing, Beijing 100084 (CN)**
• **LI, Mingliang
Beijing, Beijing 100084 (CN)**
• **LI, Jianmin
Beijing, Beijing 100084 (CN)**

• **Chen, Minyan
Beijing, Beijing 100084 (CN)**

(74) Representative: **Meissner Bolte Partnerschaft mbB
Patentanwälte Rechtsanwälte
Postfach 86 06 24
81633 München (DE)**

(56) References cited:
| | |
|---|---|
| **US-A- 5 137 355** | **US-A- 5 600 303** |
| **US-A1- 2012 069 963** | **US-A1- 2012 201 356** |
| **US-A1- 2013 208 857** | **US-A1- 2015 323 477** |
| **US-B1- 6 459 764** | **US-B2- 7 561 666** |

• **J. MARTIN ROMMEL: "A new generation of detectors for scanning x-ray beam imaging systems", JOURNAL OF INSTRUMENTATION, vol. 11, no. 01, 26 January 2016 (2016-01-26), pages C01068 - C01068, XP055716668, DOI: 10.1088/1748-0221/11/01/C01068**

EP 3 239 699 B1

## Description

TECHNICAL FIELD

The present disclosure relates to the technical field of backscatter, and particularly relates to a backscatter-imaging based inspecting system and method.

BACKGROUND

In recent years, with great importance attached to public security in the international community, X-ray backscatter technologies also gained remarkable advances. X-ray transmission technologies can make the inspected object perspective, but have a poor resolution to a material having a low atomic number, and cannot well present a small amount of light and thin organic matters such as drugs, thin explosives and etc. particularly. Although X-ray backscatter technologies have penetrating capabilities inferior to transmitting capabilities, they are very sensitive to substances having a low atomic number, and can highlight dangerous goods such as explosives and drugs. Besides, the backscatter technologies are also used in green channels on expressways to intelligently inspect agricultural products, which avoids time and energy wasting of hand inspection. However, the current backscatter technologies have very limited material resolutions, and particularly many non-contraband organic matters differ from contraband goods such as drugs and explosives very slightly in the atomic number, so it is hard for the existing backscatter technologies to distinguish them from one another, which tremendously limits the application of the technologies. In order to facilitate the development of the backscatter technologies, and improve distinguish ability on low atomic number materials, it is an urgent requirement to improve the distinguish ability by the backscatter technologies.

US 2012/201356 A1 relates to systems and methods for classifying materials as to their effective atomic numbers based on the detection of penetrating radiation scattered therefrom. The backscatter-imaging based inspecting system comprises a ray source for emitting rays to an inspected object, a multi-energy backscatter detector for receiving rays scattered by the inspected object and outputting ray signals, and a processing device connected to the ray source and the multi-energy backscatter detector respectively, for receiving the ray signals from the multi-energy backscatter detector, and processing the ray signals to obtain an image of the inspected object. Further, US 2012/201356 A1 discloses a backscatter-imaging based inspecting method, comprising: Emitting rays to an inspected object from a ray source; obtaining low energy ray signals which are scattered by the inspected object and received by a low energy backscatter detector, and high energy ray signals which are scattered by the inspected object and received by a high energy backscatter detector; and generating an image of the inspected object based on the ray signals having different energies.

With higher and higher requirements on intelligence of inspecting systems, a system without a distinguish ability of material is very limited in its intelligent discrimination capabilities and thus has very high false alarm rate and missing report rate. Only those backscatter systems which can distinguish from different materials can be satisfied to the requirements on intelligence.

SUMMARY

A technical problem to be solved in the disclosure is to provide a backscatter-imaging based inspecting system and method, capable of improving the material distinguish ability of an inspecting system.

According to an aspect of the disclosure, a backscatter-imaging based inspecting system according to claim 1 is provided.

Further, the high energy backscatter detector comprises a plurality of high energy backscatter detecting units arranged in a predetermined interval.

According to the claimed invention, the multi-energy backscatter detector comprises a plurality of backscatter detecting modules in different positions and directions, for receiving rays in various directions, scattered by the inspected object, and outputting the ray signals, respectively.

According to the claimed invention, each of the backscatter detecting modules is ring-shaped, and the plurality of backscatter detecting modules are disposed coaxially, or the plurality of backscatter detecting modules are arranged in a rectangular array.

Further, the ray source is a multi-energy ray source, for emitting rays having different energies.

Further, the ray source is a dual-energy ray source, for emitting high energy rays and low energy rays.

Further, the multi-energy backscatter detector is a flat panel detector, and/or the multi-energy backscatter detector is made of a scintillator material.

Further, the scintillator material is an organic scintillation crystal polystyrene.

According to another aspect of the disclosure, a backscatter-imaging-based inspecting system is further provided, comprising: a multi-energy ray source for generating rays having different energies, and emitting rays to an inspected object; a backscatter detector for receiving rays scattered by the inspected object and outputting ray signals; and a processing device connected to the multi-energy ray source and the backscatter detector respectively, for receiving the ray signals from the backscatter detector, and processing the ray signals to obtain an image of the inspected object.

Further, the multi-energy ray source is a dual-energy ray source, for emitting high energy rays and low energy rays.

According to a further aspect of the disclosure, a backscatter-imaging based inspecting method according to claim 7 is provided.

Further, the inspecting method further comprises: emitting high energy rays and low energy rays to the inspected object simultaneously or in a time-division manner from the ray source; and obtaining low energy ray signals and high energy ray signals which are scattered by the inspected object and received by the backscatter detector.

Further, the inspecting method further comprises: comparing a parameter of every received energy ray signals with corresponding parameter of high energy ray signals and low energy ray signals in a known material data table, to determine a material of the inspected object, wherein the known material data table contains mapping relations between a known material and a parameter of high and low energy ray signals which are scattered by the known material and received by the multi-energy backscatter detector.

As compared with the prior art, the backscatter-imaging based inspecting system of the disclosure comprises a ray source for emitting rays to an inspected object; a multi-energy backscatter detector for receiving rays scattered by the inspected object and outputting ray signals; and a processing device for receiving the ray signals from the multi-energy backscatter detector, and processing the ray signals to obtain an image of the inspected object. The density and atomic number of the inspected object can be more correctly identified in the disclosure, based on differences in physical effects of the material of the inspected object with respect to rays with different energy, which improves the material distinguish ability of an inspecting system.

Other features and advantages of the disclosure will become clear by describing the illustrative embodiments of the disclosure with reference to the accompanying drawings below.

BRIEF DESCRIPTION OF THE DRAWINGS

The accompanying drawings that constitute a portion of the description, describe the embodiments of the disclosure, and are used for explaining the principles of the disclosure together with the description.

The disclosure will be understood more clearly according to the following detailed descriptions with reference to the accompanying drawings.

Fig.1 is a schematic diagram showing a structure of a first embodiment of the backscatter-imaging based inspecting system of the disclosure.
Fig.2 is a schematic diagram showing a structure of a not-claimed backscatter-imaging based inspecting system of the disclosure.
Fig.3 is a schematic diagram showing a structure of a not-claimed backscatter-imaging based inspecting system of the disclosure.
Fig.4 is a schematic diagram showing a structure of a not-claimed inspecting system based on multi-solid angle backscatter imaging of the disclosure.
Fig.5 is a schematic diagram showing a structure of a not-claimed inspecting system based on multi-solid angle backscatter imaging of the disclosure.
Fig.6 is a schematic diagram showing a structure of an embodiment of the inspecting system based on multi-solid angle backscatter imaging of the claimed invention
Fig.7 is a schematic diagram showing a structure of an embodiment of the backscatter-imaging based inspecting system of the claimed invention.
Fig.8 is a schematic diagram showing a structure of a not-claimed backscatter-imaging based inspecting system of the disclosure.
Fig.9 is a schematic diagram showing a flowchart of an embodiment of the backscatter-imaging based inspecting method of the disclosure.
Fig.10 is a calibration diagram of the backscatter-imaging based inspecting method of the disclosure.
Fig.11 is a schematic diagram showing a flowchart of another embodiment of the backscatter-imaging based inspecting method of the disclosure.
Fig.12 is another calibration diagram of the backscatter-imaging based inspecting method of the disclosure.
Fig.13 is a further calibration diagram of the backscatter-imaging based inspecting method of the disclosure.
Fig.14 is a schematic diagram showing a flowchart of a further embodiment of the backscatter-imaging based inspecting method of the disclosure.
Fig.15 is a schematic diagram showing a flowchart of an embodiment of the inspecting method based on multi-solid angle backscatter imaging of the disclosure.
Fig.16 is a schematic diagram showing a specific application of a not-claimed backscatter-imaging based inspecting system of the disclosure.
Fig.17 is a schematic diagram showing another specific application of not-claimed backscatter-imaging based inspecting system of the disclosure.

DETAILED DESCRIPTION

Various illustrative embodiments of the present disclosure are described in more detail with reference to the accompanying drawings. It should be noted that, unless otherwise specified, relative arrangements of elements and steps, numerical expressions and values set forth in these embodiments are not intended to limit the scope of the disclosure.

It should be also appreciated that, in order to facilitate description, the sizes of the various portions shown in the accompanying drawings are not drawn according to actual proportional relations.

The descriptions to the at least one illustrative embodiments below in fact are merely descriptive, and never serve as any limitation to the disclosure and its application or usage.

Technologies, methods and apparatuses known to those skilled in the relevant field possibly may not be discussed in detail, but in a suitable case, the technologies, methods and apparatuses shall be regarded as a portion of the granted description.

In all the examples shown and discussed here, any specific value shall be construed as merely illustrative but not restrictive. Thus, other examples of the illustrative embodiments can have different values.

It should be noted that, similar numerals and characters represent similar items in the following accompanying drawings. Thus, once an item is defined in an accompanying drawing, it is not required to further discuss it in the subsequent accompanying drawings.

In order to make the object, the technical solutions and the advantages of the disclosure clearer, the disclosure will be further described in detail with reference to the accompanying drawings in combination with the embodiments.

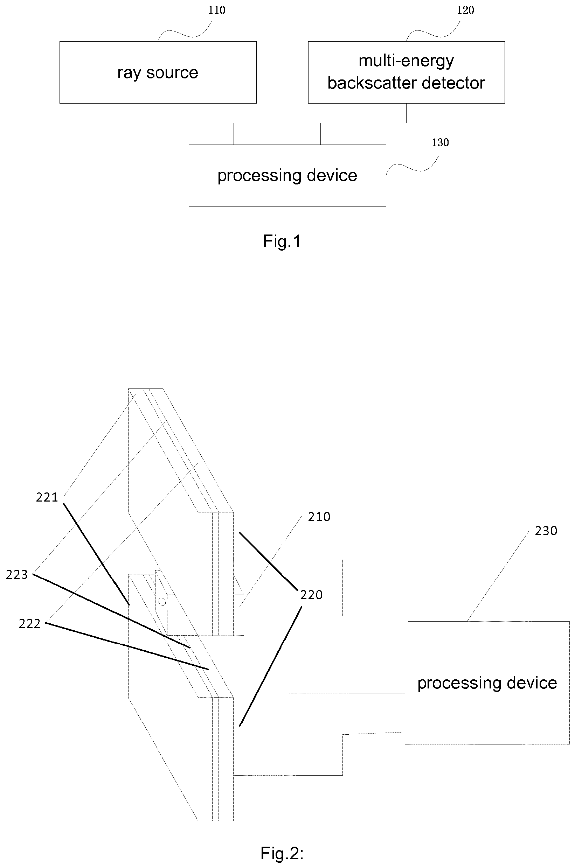

Fig.1 is a schematic diagram showing a structure of a first embodiment of the backscatter-imaging based inspecting system of the disclosure. The backscatter-imaging based inspecting system comprises: a ray source 110, a multi-energy backscatter detector 120 and a processing device 130, wherein the processing device 130 is connected to the ray source 110 and the multi-energy backscatter detector 120 respectively, more specifically, via an electrical connection.

The ray source 110 is used for emitting rays to an inspected object. The ray source 110 may generate flying spot X rays, and can be a general X-ray source plus a special collimator, or a flying point X-ray machine.

The multi-energy backscatter detector 120 is used for receiving rays scattered by the inspected object and outputting ray signals.

In an embodiment, the multi-energy backscatter detector 120 may be a dual-energy backscatter detector, and for example comprises a low energy backscatter detector and a high energy backscatter detector. Those skilled in the art would appreciate that, the dual-energy backscatter detector is merely an example, and the multi-energy backscatter detector may be set as a plurality of backscatter detectors capable of receiving rays with different energies as needed.

The processing device 130 is used for receiving the ray signals from the multi-energy backscatter detector 120, and processing the ray signals to obtain an image of the inspected object.

The processing device 130 may be a computer system that can control the ray source 110 to emit rays, and after receiving the ray signals outputted from the multi-energy backscatter detector 120, it identifies the density and atomic number of the inspected object based on differences on the physical effects of the material of the inspected object to the ray backscatter signals having different energies. Besides, the gray scale image of the inspected object can be generated based on the received ray signals, and a pseudo color is assigned to the gray scale image by using the multi-energy backscatter identification result, thereby form the image of the inspected object.

In the embodiment, the ray source emits rays to an inspected object, the multi-energy backscatter detector receives rays scattered by the inspected object and outputs ray signals; and the processing device receives the ray signals from the multi-energy backscatter detector, and processes the ray signals to obtain an image of the inspected object. In the disclosure, based on differences on the physical effects of the material of the inspected object to the ray backscatter signals having different energies, a multi-energy backscatter detector is used for receiving the rays scattered by the inspected object, to more accurately identify the inspected object, which improves the material distinguish ability of the inspecting system.

Fig.2 is a schematic diagram showing a structure of a not-claimed backscatter-imaging based inspecting system of the disclosure. The inspecting system comprises: a ray source 210, a dual-energy backscatter detector 220 and a processing device 230.

The ray source 210 is used for emitting rays to the inspected object. The ray source may emit rays having only one energy or rays having a plurality of energies. For example, the ray source emits high energy rays and low energy rays simultaneously or in a time-division manner.

In one embodiment, a ray source that only emits rays having one energy is taken as an example. In order to improve the detecting efficiency, two dual-energy backscatter detectors 220 are provided at both sides of the ray source, or one or more dual-energy backscatter detectors 220 are provided according to specific situations. The dual-energy backscatter detector 220 may comprise a low-energy backscatter detector 221 and a high energy backscatter detector 222. The low-energy backscatter detector 221 can receive low energy rays scattered by the inspected object, and the high energy backscatter detector 222 can receive high energy rays scattered by the inspected object.

The low-energy backscatter detector 221 and the high energy backscatter detector 222 may be made of the same scintillator material, e.g., organic scintillation crystal polystyrene, or be made of different scintillator materials.

In one embodiment, a filtering device 223, more specifically, a filter plate, may be further provided between the low-energy backscatter detector 221 and the high energy backscatter detector 222 to form a detector with a sandwich structure. The filter plate can absorb a portion of energy of the rays, to effectively generate an energy difference between the high and low energy backscatter detectors. The material of the filter plate may be Aluminum, Iron, Copper, Silver or Gold, or an alloy material thereof.

Since a backscatter signal is weaker than a transmission signal, its detection mode and analysis method are also different. The dual-energy backscatter detector with sandwich structure in the present embodiment can be a flat panel detector, which detects a synthesis signal based on an angle effect and an energy effect, and thus weak rays scattered by the inspected object can be detected more easily.

The processing device 230 receives high energy ray signals and low energy ray signals outputted by the dual-energy backscatter detector, and distinguishes the density or atomic number of the inspected object based on differences on some physical effects of the material to signals having different energies.

The processing device 230 also can generate a gray scale image of the inspected object according to the ray signals having different energies, and assign a pseudo color to the gray scale image by using the dual-energy backscatter identification result. Since the ray source emits rays having the same energy, it does not need to make registration to the generated image.

When identifying the material of the inspected object, a known material can be scanned in advance by using the inspecting system in the present embodiment, e.g., samples or mimics of drugs and explosives, leather products, cigarette, metal, etc., and the high energy ray signals and the low energy ray signals outputted by the dual-energy backscatter detectors are recorded. A mapping relation between the known material and a parameter of high and low energy ray signals can be stored in a data table, and it can be also calibrated by a coordinate system. For example, each pixel point in the coordinate system can correspond to a respective known material. When the backscatter-imaging based inspecting system of the disclosure is utilized for detecting the inspected object of an unknown material, the high energy ray signals and the low energy ray signals outputted by the dual-energy backscatter detector can be acquired and the material of the inspected object can be determined by comparing the parameter of every ray signals with those in the coordinate system. In one embodiment, a material classifier can be also utilized for identifying the material of the inspected object, a detailed discussion of which is omitted here.

In the embodiment, by providing a dual-energy backscatter detector for detecting ray signals having different energies and scattered by the inspected object, the density and atomic number of the inspected object can be identified; by applying the inspecting system to a security inspecting system, drugs, explosives and etc. can be effectively identified, which improves the intelligentized degree of the detection and reduces the working load of an inspector.

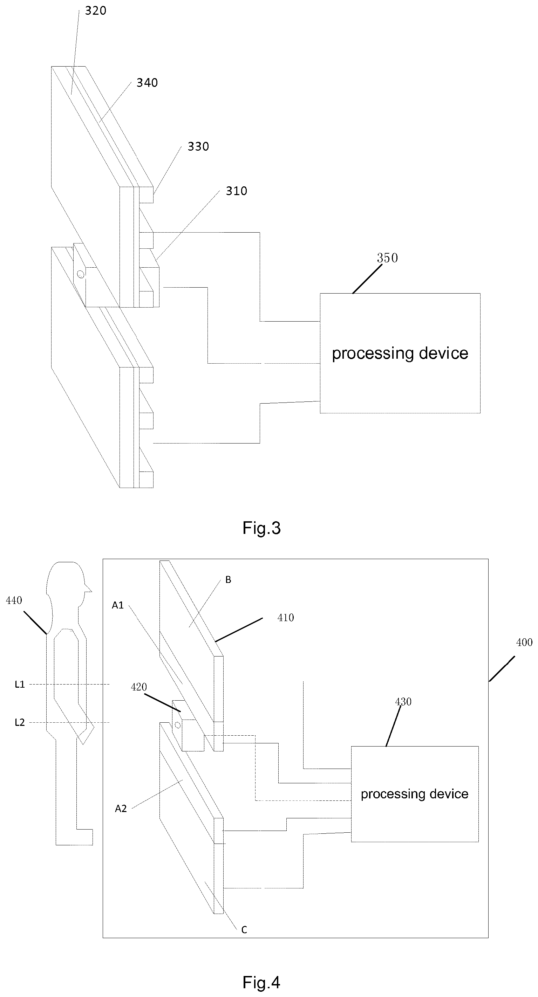

Fig.3 is a schematic diagram showing a structure of a not-claimed backscatter-imaging based inspecting system of the disclosure. A ray source 310, a low-energy backscatter detector 320, a filtering device 340 and a processing device 350 are identical with the ray source 210, the low-energy backscatter detector 221, the filtering device 223 and the processing device 230 in Fig.2, respectively. Since they have been discussed in the above-mentioned embodiments, further descriptions thereof are omitted here.

The high energy backscatter detector 330 may comprise a plurality of high energy backscatter detecting units which may be strips and arranged in a predetermined interval. For example, the high energy backscatter detecting units are arranged horizontally, vertically or in other manner.

In the design of the embodiment, costs can be reduced, and a gray scale image with a high signal-to-noise ratio can be obtained by the low energy backscatter detector, a material distinguish ability with high cost performance can be obtained by the high energy backscatter detector, and a pseudo color is assigned to the gray scale image, thus it is can be more accurately identified whether or not the inspected object comprises a contraband good.

In another embodiment not according to the claimed invention, as shown in Fig.4, the backscatter detector 410 in the multi-solid angle backscatter-imaging based inspecting system 400 comprises a plurality of backscatter detecting modules in different positions and directions, for example, A1, A2, B, C positions respectively represent backscatter detecting modules under four different view angles. A1 and A2 are more close to the ray source 420, and B and C are farer away from the ray source 420. In an embodiment, the backscatter detector 410 may be a multi-energy backscatter detector, or a normal backscatter detector. The normal backscatter detector is described below as an example.

There is a comparatively complex relationship between the backscatter effect and the ray energy, scattering angle and reflection angle. For example, the energy value of scattered photons is calculated as below:

$$E_{r'} = \frac{E_r}{1 + \dfrac{E_r}{c^2 m_0 (1 - \cos\theta)}}$$

Where $E_r$ represents energy of incident photon, $E_{r'}$ represents energy of scattered photon, $\theta$ represents a scattering angle. It can be seen that, a scattered signal is relevant to energy and angle.

The inspecting system based on multi-solid angle backscatter imaging in the embodiment identifies the material by means of difference on the physical effect of different materials with respect to rays in a different direction. After the ray source 420 emits rays to the inspected object 440, the rays are scattered by the inspected object and received by the backscatter detector 410. The backscatter detecting module A, backscatter detecting module B, backscatter detecting module C and backscatter detecting module D respectively convert the received rays into ray signals and output them to the processing device 430. The processing device 430 identifies the material of the inspected object according to characteristics of the ray signals in different directions. The processing device 430 can also obtain a gray scale image of the inspected object by using the backscatter signals, and assign a pseudo color to the gray scale image by using the material identifying result, thus an effective combination of high resolution and high cost performance of material distinguish ability can be realized.

For example, when the inspecting system scans an area facing the ray source, i.e., an area between the inspected objects L1 and L2, the rays received by the backscatter detecting modules A1+A2 are output as ray signals in one direction, and the rays received by the backscatter detecting module B or C are output as ray signals in another direction. When other areas are scanned, the rays received by the backscatter detecting module B are output as ray signals in one direction, and the rays received by the backscatter detecting module C are ray signals in another direction. The material of the inspected object can be identified depending on a difference between the ray signals detected in two directions. In the prior art, the multi-visual angle X-ray technology mainly solves the problem of occlusion or stack of single-visual angle images, and the inspecting system based on multi-solid angle backscatter imaging of the disclosure can solve the problem of material identification, thus has a great practicability.

In an embodiment, the inspecting system based on multi-solid angle backscatter imaging can be used in advance for scanning a known material, thereby the ray signals in different directions scattered by the known material are recorded, a mapping relations between the known material and the ray signals in different directions can be stored in a data table, and it can be also calibrated by a coordinate system. For example, each pixel point in the coordinate system can correspond to a respective known material. When the backscatter-imaging based inspecting system of the disclosure is utilized for detecting the inspected object made of an unknown material, the ray signals in different directions outputted by the backscatter detector are acquired and the material of the inspected object can be determined by comparing the ray signals with those in the coordinate system. In one embodiment, a material classifier can be also utilized for identifying the material of the inspected object, a detailed discussion of which is omitted here.

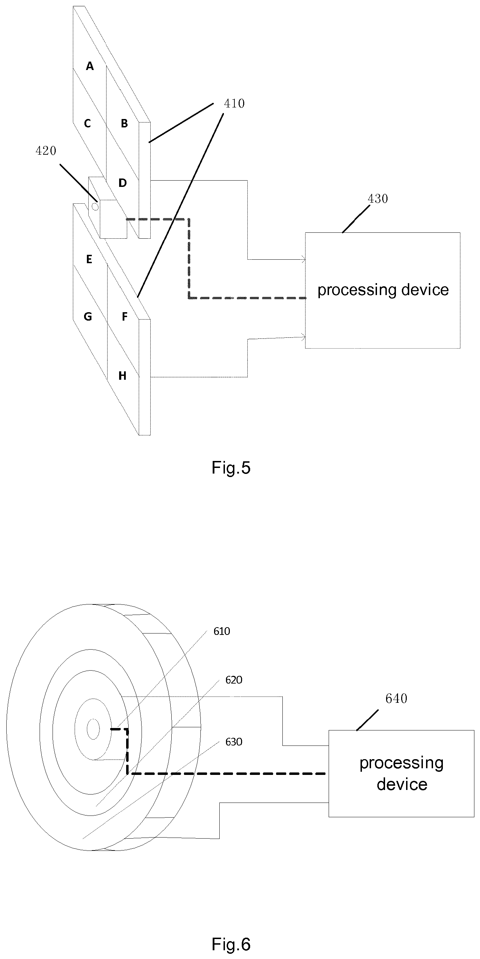

Those skilled in the art would appreciate that, the backscatter detector 410 can be set as comprising a plurality of backscatter detecting modules in different positions and directions according to actual conditions. For example, as shown in an embodiment not according to the claimed invention in Fig.5, the respective backscatter detecting modules are arranged in a rectangular array. For example, the backscatter detector 410 is divided into eight backscatter detecting modules from 8 view angles: A, B, C, D, E, F, G and H. When identifying the material of the inspected object, a mathematically 8-dimensional space can be used for recording the calibrated data and test data, there by the material of the inspected object can be distinguished accurately.

According to the claimed invention, by using the feature of geometric symmetry, a backscatter detecting module can be shaped as a ring, e.g. circular ring-shaped or elliptical ring-shaped. As shown in Fig.6, 620 is the first backscatter detecting module and 630 is the second backscatter detecting module, and the two backscatter detecting modules are disposed coaxially. The ray source 610 emits rays to the inspected object, and the rays scattered by the inspected object are respectively received by the first backscatter detecting module 620 and the second backscatter detecting module 630 from two angles. The ray signals from the two angles are outputted to the processing device 640, which can identify the material of the inspected object according to a difference between the ray signals detected in two directions.

For example, when identifying the material of the inspected object, a known material can be scanned in advance by using the inspecting system in the present embodiment, e.g., samples or mimics of drugs and explosives, leather products, cigarette, metal and so on. The ray signals in a first direction outputted by the first backscatter detecting module 620 and the ray signals in a second direction outputted by the second backscatter detecting module 630 are recorded and a mapping relation between the known material and the ray signals in two directions is stored in a data table or the mapping relation can be calibrated in a coordinate system. For example, each pixel point in the coordinate system can correspond to a respective known material. When the backscatter-imaging based inspecting system of the disclosure is utilized for detecting the inspected object of an unknown material, the ray signals in a first direction outputted by the first backscatter detecting module 620 and the ray signals in a second direction outputted by the second backscatter detecting module 630 are acquired and the material of the inspected object can be determined by comparing the acquired ray signals in two directions with those data in the coordinate system. In one embodiment, a material classifier can be also utilized for identifying the material of the inspected object, a detailed discussion of which is omitted here.

Those skilled in the art would appreciate that, the two coaxially arranged backscatter detecting modules in the embodiment are provided merely as an example, and a plurality of backscatter detecting modules can be provided as needed.

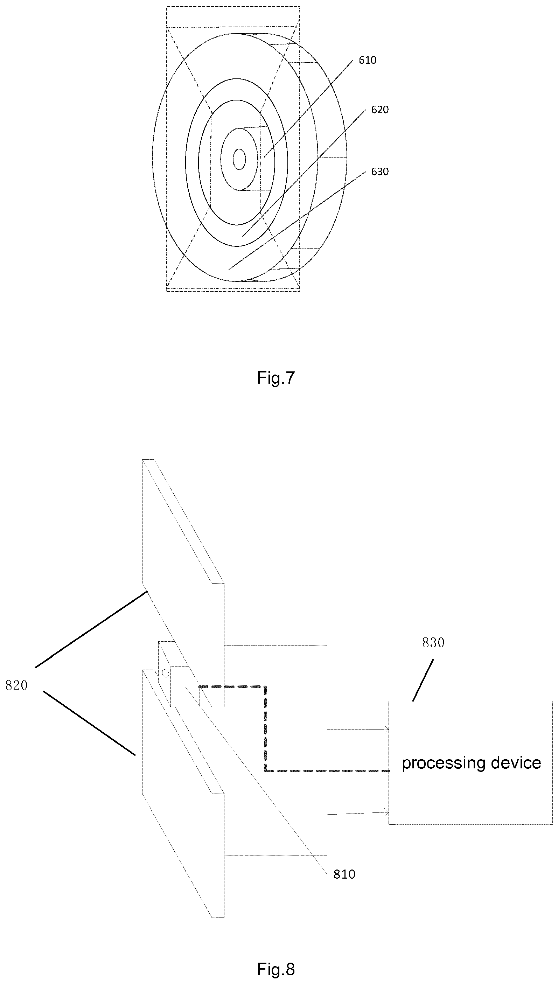

In a specific application, as shown in Fig.7, only a portion inside a dashed-line box or a portion inside a dotted-line box may be reserved as the backscatter detector, which adapts to the characteristics of the test body and the limitation of equipment installation, thus a requirement on the test field is reduced and costs are saved.

In the embodiment, by setting circular ring-shaped or elliptic ring-shaped backscatter detecting modules and using the feature of geometric symmetry, subsequent signal processing becomes simpler, for example, the algorithm processing is simpler, data processing complexity is reduced, and the density and atomic number of the inspected object can be identified more accurately.

Fig.8 is a schematic diagram showing a structure of a not-claimed backscatter-imaging based inspecting system of the disclosure. The inspecting system comprises: a multi-energy ray source 810, a backscatter detector 820 and a processing device 830, wherein the processing device 830 is connected to the multi-energy ray source 810 and the backscatter detector820 respectively, more specifically, by an electrical connection.

The multi-energy ray source 810 is used for generating rays having different energies and emitting the rays to an inspected object. In one embodiment, the multi-energy ray source is a dual-energy ray source and can emit rays to the inspected object simultaneously or in a time-division manner. Those skilled in the art would appreciate that, the dual-energy ray source is merely taken as an example, and the ray source may be set to emit signals with a plurality of different energies as needed.

The backscatter detector 820 is used for receiving rays scattered by the inspected object and outputting ray signals. For example, when the multi-energy ray source 810 is a dual-energy ray source, the backscatter detector 820 outputs low energy ray signals and high energy ray signals. The backscatter detector 820 may be a multi-energy backscatter detector or a normal backscatter detector.

The processing device 830 is used for receiving the ray signals from the backscatter detector 820, and processing the ray signals to obtain an image of the inspected object. When the multi-energy ray source 810 emits rays having different energies in a time-division manner, it is necessary to make registration to the generated image, and when the multi-energy ray source 810 emits rays having different energies simultaneously, it is unnecessary to make registration to the generated image.

After the processing device 830 receives the ray signals having different energies, it can identify the density or atomic number of the inspected object based on differences on the physical effects of the material with respect to ray backscatter signals having different energies, which can effectively identify the material of the inspected object.

In the embodiment, by using the multi-energy ray source, based on differences on the physical effects of the material with respect to the ray backscatter signals having different energies, the disclosure can effectively identify the image and material of the inspected object; by applying the inspecting system to a security inspecting system, drugs, explosives and so on can be effectively identified, which improves the intelligentized degree of the detection and reduces the working load of the inspector.

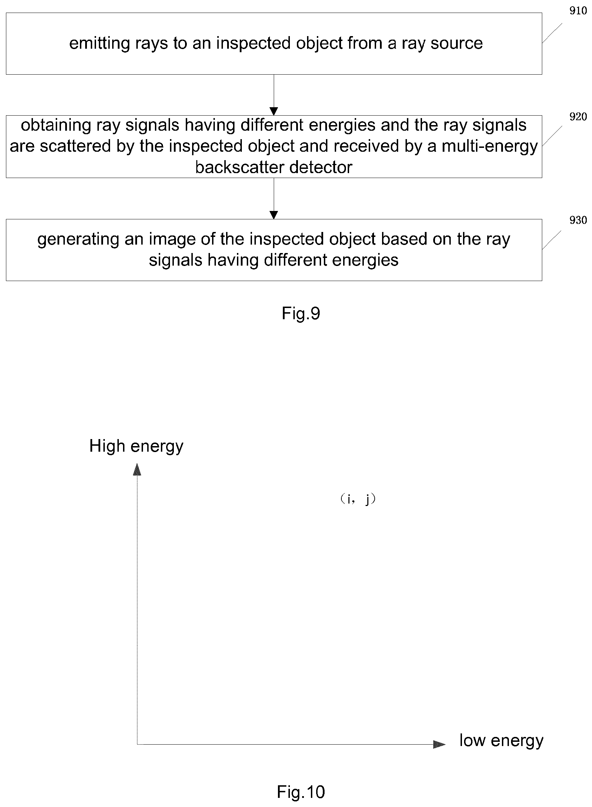

Fig.9 is a schematic diagram showing a flowchart of an embodiment of the backscatter-imaging based inspecting method of the disclosure. The method comprises the following steps:
A step 910 of emitting rays to an inspected object from a ray source.

The emitted rays may be rays having the same energy or rays having different energies.

A step 920 of obtaining ray signals having different energies and the ray signals are scattered by the inspected object and received by a multi-energy backscatter detector.

In one embodiment, the multi-energy backscatter detector is a dual-energy backscatter detector, which comprises, for example, a low energy backscatter detector and a high energy backscatter detector. The low energy backscatter detector receives low energy ray signals scattered by the inspected object and the high energy backscatter detector receives high energy ray signals scattered by the inspected object.

A step 930 of generating an image of the inspected object based on the ray signals having different energies.

The density and atomic number of the inspected object can be determined based on differences on the physical effects of the material of the inspected object with respect to ray backscatter signals having different energies. Besides, a gray scale image of the inspected object can be generated based on the received ray signals, and a pseudo color is assigned to the gray scale image according to the multi-energy backscatter identification result, to thereby form an image of the inspected object.

In an embodiment, the material of the inspected object can be identified by using a formula calculation method or a calibration method. For example, a known material, e.g., samples or mimics of drugs and explosives, leather products, cigarette, metal and so on, is scanned in advance and the high energy ray signals and the low energy ray signals outputted by the dual-energy backscatter detectors are recorded. a mapping relation between the known material and a parameter of high energy ray signals and low energy ray signals is stored in a data table or is calibrated in a coordinate system. As shown in Fig.10, by taking the low energy ray signals detected by the dual-energy backscatter detector as horizontal coordinates and taking the high energy ray signals detected by the dual-energy backscatter detector as longitudinal coordinates, each pixel point (i, j) in the coordinate system can correspond to a respective known material. When the inspecting system is utilized for detecting the inspected object of an unknown material, the high energy ray signals and the low energy ray signals outputted by the dual-energy backscatter detector are acquired and the material of the inspected object can be determined by comparing the parameter of the acquired ray signals with those in the coordinate system. In another embodiment, a material classifier can be also utilized for identifying the material of the inspected object, a detailed discussion of which is omitted here.

In the embodiment, by providing a multi-energy backscatter detector for detecting ray signals having different energies scattered by the inspected object, the density and atomic number of the inspected object can be identified; by applying the inspecting system to a security inspecting system, drugs, explosives and so on can be effectively identified, which improves the intelligentized degree of the detection and reduces the working load of the inspector.

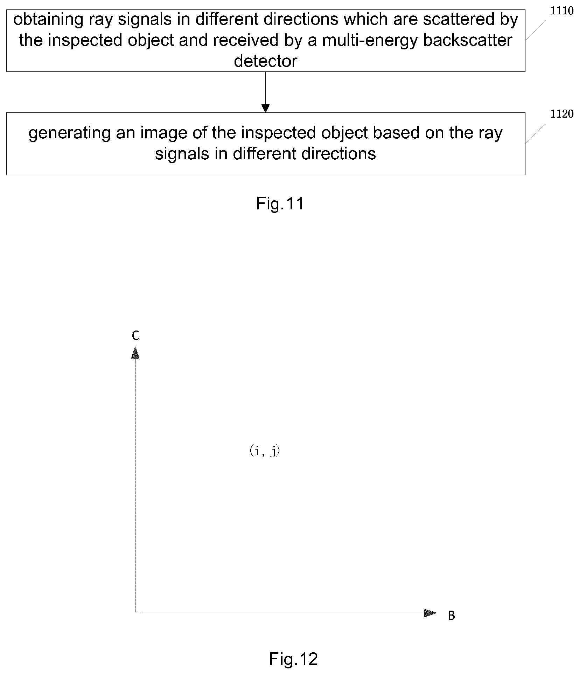

Fig.11 is a schematic diagram showing a flowchart of another embodiment of the backscatter-imaging based inspecting method of the disclosure. The method further comprises the following steps:

A step 1110 of obtaining ray signals in different directions which are scattered by the inspected object and received by a multi-energy backscatter detector.

As can be seen from Fig.4, the backscatter detector comprises a plurality of backscatter detecting modules in different positions and directions, wherein positions A1, A2, B, C respectively represent backscatter detecting modules in four view angles, and the respective backscatter detecting modules receive rays scattered in respective directions. Also as can be seen from Fig.6, each of the backscatter detecting modules can be circular ring-shaped or elliptical ring-shaped, wherein the first backscatter detecting module and the second backscatter detecting module respectively receive rays scattered by the inspected object from two angles.

A step 1120 of generating an image of the inspected object based on the ray signals in different directions.

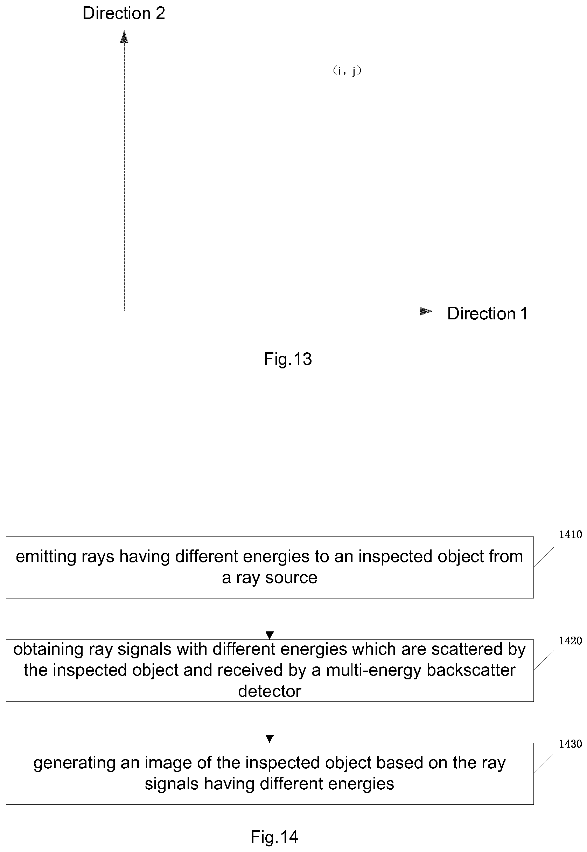

In an embodiment, the inspecting system is used in advance for scanning a known material, thereby the ray signals in different directions scattered by the known material are recorded. The mapping relations between the known material and the ray signals in different directions is stored in a data table, or calibrated in a coordinate system. As shown in Fig.12 and Fig.13, each pixel point in the coordinate system can correspond to a respective known material. When the inspecting system is utilized for detecting the inspected object of an unknown material, the ray signals in different directions outputted by the backscatter detector are acquired and the material of the inspected object can be determined by comparing the acquired ray signals with those in the coordinate system. In one embodiment, a material classifier can be also utilized for identifying the material of the inspected object, a detailed discussion of which is omitted here.

Fig.14 is a schematic diagram showing a flowchart of a further embodiment of the backscatter-imaging based inspecting method of the disclosure.

A step 1410 of emitting rays having different energies to an inspected object from a ray source.

In an embodiment, the ray source is a dual-energy ray source and can emit rays having two different energies to the inspected object simultaneously or in a time-division manner.

A step 1420 of obtaining ray signals with different energies which are scattered by the inspected object and received by a multi-energy backscatter detector.

When the ray source is a dual-energy ray source, the backscatter detector outputs high energy ray signals and low energy ray signals.

A step 1430 of generating an image of the inspected object based on the ray signals having different energies.

The density or atomic number of the inspected object can be determined based on differences on the physical effects of the material of the inspected object with respect to ray backscatter signals having different energies. Besides, a gray scale image of the inspected object can be generated based on the ray signals having different energies, and a pseudo color is assigned to the gray scale image according to the dual-energy backscatter identification result, to thereby form the image of the inspected object.

In an embodiment, the material of the inspected object can be identified by using a formula calculation method or a calibration method. For example, a known material, e.g., samples or mimics of drugs and explosives, leather products, cigarette, metal and so on, is scanned in advance and the high energy ray signals and the low energy ray signals outputted by the backscatter detector is recorded. A mapping relation between the known material and a parameter of the high energy ray signals and the low energy ray signals is stored in a data table or calibrated in a coordinate system. As shown in Fig.10, by taking the low energy ray signals detected by the dual-energy backscatter detector as horizontal coordinates and taking the high energy ray signals detected by the dual-energy backscatter detector as longitudinal coordinates, each pixel point (i, j) in the coordinate system can correspond to a respective known material. When the inspecting system is utilized for detecting the inspected object of an unknown material, the high energy ray signals and the low energy ray signals outputted by the backscatter detector are acquired and the material of the inspected object can be determined by comparing the parameter of the acquired ray signals with those in the coordinate system. In another embodiment, a material classifier can be also utilized for identifying the material of the inspected object, a detailed discussion of which is omitted here.

In the embodiment, by using the multi-energy ray source, the image and material of the inspected object can be effectively identified based on differences on the physical effects of the material with respect to the ray backscatter signals having different energies; by applying the inspecting system to a security inspecting system, drugs, explosives and so on can be effectively identified, which improves the intelligentized degree of the detection and reduces the working load of the inspector.

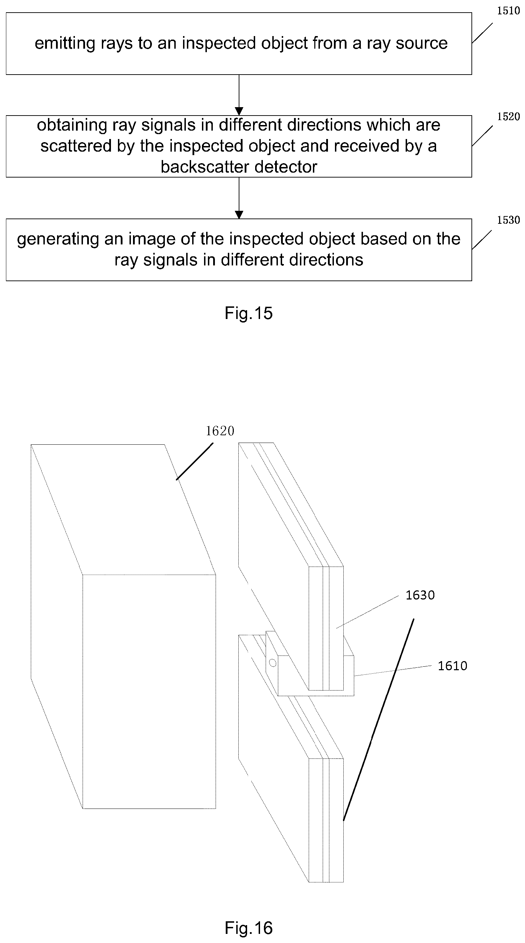

Fig.15 is a schematic diagram showing a flowchart of an embodiment of the inspecting method based on multi-solid angle backscatter imaging of the disclosure. The method further comprises the following steps:

A step 1510 of emitting rays to an inspected object from a ray source.

A step 1520 of obtaining ray signals in different directions which are scattered by the inspected object and received by a backscatter detector. The backscatter detector may be a normal backscatter detector. As can be seen from Fig.4, the backscatter detector comprises a plurality of backscatter detecting modules in different positions and directions, wherein positions A1, A2, B, C respectively represent backscatter detecting modules in four view angles, and the respective backscatter detecting modules receive rays scattered in respective directions. As also can be seen from Fig.5, the respective backscatter detecting modules are arranged in a rectangular array. As also can be seen from Fig.6, each of the respective backscatter detecting modules can be arranged in a circular ring-shaped or an elliptical ring-shaped, wherein the first backscatter detecting module and the second backscatter detecting module respectively receive rays scattered by the inspected object from two angles.

A step 1530 of generating an image of the inspected object based on the ray signals in different directions.

In an embodiment, the inspecting system can be used in advance for scanning a known material, and the ray signals in different directions which are scattered by the known material are recorded. The mapping relations between the known material and the ray signals in different directions are stored in a data table or calibrated in a coordinate system. As shown in Fig.12 and Fig.13, each pixel point in the coordinate system can correspond to a respective known material. When the inspecting system is utilized for detecting the inspected object of an unknown material, the ray signals in different directions outputted by the backscatter detector are acquired and the material of the inspected object can be determined by comparing the acquired ray signals with those in the coordinate system. In another embodiment, a material classifier can be also utilized for identifying the material of the inspected object, a detailed discussion of which is omitted here.

The inspecting system and method of the disclosure may be applied to security inspection fields for scanning vehicles, cargoes, luggage, persons, so as to realize backscatter imaging and material identification.

For example, when the backscatter-imaging based inspecting system not in accordance with the claimed invention scans vehicles or cargoes in the vicinity of a port, as shown in Fig.16, in an access checkpoint, a ray source 1610 and a dual-energy detector 1630 are provided at the access, and a processing device is not marked in the figure. In a mobile inspection system, the ray source 1610 and the dual-energy detector 1630 can be installed on a cantilever of a vehicle-mounted inspection system or on a vehicle. The ray source 1610 emits X-rays to the vehicle 1620, and the X-rays are scattered by the vehicle 1620 and received by the dual-energy detector 1630 to output ray signals. Through certain processing, it can be detected whether or not the vehicle carries a dangerous goods and of which material the dangerous goods is made, which can improve accuracy of identification and reduces the false positive rate.

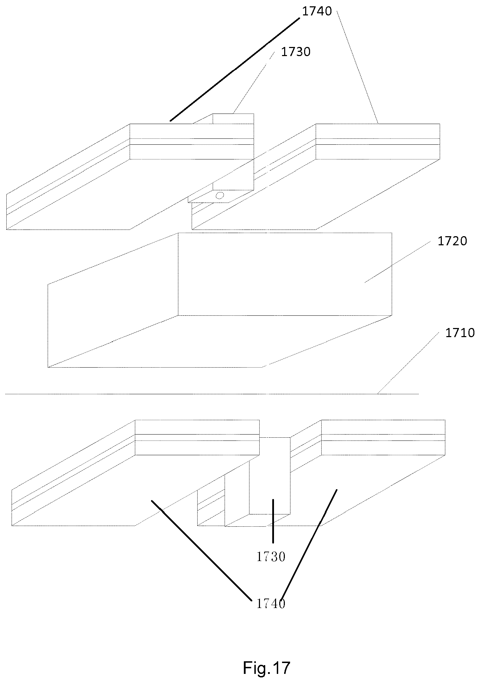

In another application example, the backscatter-imaging based inspecting system not in accordance with the claimed invention can be applied to a backscatter article machine system, as shown in Fig.17. Bags 1720 are conveyed on a transfer belt 1710. In order to improve detecting efficiency, a plurality sets of backscatter-imaging based inspecting systems can be provided, for example, a ray source 1730 and a dual-energy detector 1740 are provided at both sides (up and down, or left and right) of the bag, and a processing device is not marked in the figure. The ray source 1730 emits X-rays to the passing bag 1720, and the X-rays are scattered by the bag 1720 and received by the dual-energy detector 1740 to output ray signals. Through certain processing, the article carried in the bag can be learned. As compared with the traditional X-ray article machine, the inspecting system of the disclosure can better identify whether or not drugs or explosives are hidden in the bag sandwich.

The disclosure is very adapted to a security inspection environment with a large throughput, and since it has a good material resolution and higher intelligent degree, it reduces the difficulty to operate by the inspector, improves accuracy of the inspection and reduces the false positive rate.

To this end, the disclosure has been described in detail. In order to avoid obstructing the concept of the disclosure, some details well known in the art are not described. However, those skilled in the art completely could understand how to carry out the technical solutions disclosed herein according to the above description.

The disclosure and apparatus of the disclosure can be carried out in many ways. For example, the disclosure and apparatus of the disclosure can be carried out by means of software, hardware, firmware or any combination of software, hardware, firmware. The above-mentioned order of the steps of the method is merely illustrative, and the steps of the method of the disclosure are not limited to the above specifically described order, unless otherwise specified. Furthermore, in some embodiment, the disclosure can be also implemented as a program recorded on a readable medium, the program comprising machine readable instructions for performing the method according to the disclosure. Accordingly, the disclosure further covers the recording medium for storing the program for performing the method according to the disclosure.

**Claims**

1. A backscatter-imaging based inspecting system, comprising:

   a ray source (110, 210, 310, 420, 610) for emitting rays to an inspected object;
   a multi-energy backscatter detector (120) for receiving rays scattered by the inspected object and outputting ray signals, wherein the multi-energy backscatter detector (120) is a dual-energy backscatter detector (220), the dual-energy backscatter detector (220) comprises:

   a low energy backscatter detector (221, 320); and
   a high energy backscatter detector (222, 330),
   wherein the low energy backscatter detector (221, 320) and the high energy backscatter detector (222, 330) comprise a plurality of backscatter detecting modules (620, 630) in different positions and directions, and

   a processing device (130, 230, 350, 430, 640, 830) connected to the ray source (110, 210, 310, 420, 610) and the multi-energy backscatter detector (120) respectively, for receiving the ray signals from the multi-energy backscatter detector, and processing the ray signals to obtain an image of the inspected object, and whereby the backscatter-imaging based inspecting system is **characterised by** that each of the backscatter detecting modules (620, 630) is ring-shaped, and the plurality of backscatter detecting modules (620, 630) are disposed coaxially.

2. The system according to Claim 1, **characterized in that**, the high energy backscatter detector (222, 330) comprises a plurality of high energy backscatter detecting units arranged in a predetermined interval.

3. The system according to Claim 1, **characterized in that**, the ray source (110, 210, 310, 420, 610) is a multi-energy ray source (810), for emitting rays having different energies.

4. The system according to Claim 3, **characterized in that**, the ray source (110, 210, 310, 420, 610) is a dual-energy ray source (810), for emitting high energy rays and low energy rays.

5. The system according to any of Claims 1, **charac-**

**terized in that**, the multi-energy backscatter detector (120) is a flat panel detector, and/or the multi-energy backscatter detector (120) is made of a scintillator material.

6. The system according to Claim 5, **characterized in that**, the scintillator material is an organic scintillation crystal polystyrene.

7. A backscatter-imaging based inspecting method, comprising:

   emitting, by a ray source, rays to an inspected object;
   splitting, by a low energy backscatter detector, and a high energy backscatter detector, scattered rays by the inspected object into low energy ray signals and high energy ray signals from scattered rays by the inspected object, wherein the low energy backscatter detector and the high energy backscatter detector comprise a plurality of backscatter detecting modules in different positions and directions, and processing, by a processing device, the low energy ray signals and the high energy ray signals received from the dual-energy backscatter detector to obtain an image of the inspected object, whereby the backscatter-imaging based inspecting method is **characterised by** that each of the backscatter detecting modules is ring-shaped, and the plurality of backscatter detecting modules are disposed coaxially.

8. The method according to Claim 7, **characterized in** further comprising:

   comparing, by the processing device, a parameter of every received high energy ray signals and low energy ray signals with corresponding parameter of high energy ray signals and low energy ray signals in a known material data table, to determine a material of the inspected object,
   wherein the known material data table contains mapping relations between every known material and a parameter of high and low energy ray signals, wherein the high and low energy ray signals are scattered by the known material and received by the dual -energy backscatter detector.

9. The method according to Claim 7, **characterized in** further comprising:

   Obtaining, by the processing device, multiple beams of the high energy ray signals and multiple beams of the low energy ray signals in different directions, from the dual -energy backscatter detector; and

generating an image of the inspected object based on the multiple beams of the high energy ray signals and the multiple beams of the low energy ray signals in the different directions.

10. The method according to Claim 9, **characterized in** further comprising:

comparing, by the processing device, parameters of every received multiple beams of the high energy ray signals and multiple beams of the low energy ray signals in different directions with corresponding parameters of multiple beams of high and low energy ray signals in different directions in the known material data table, to determine a material of the inspected object,

wherein the known material data table contains mapping relations between every known material and parameters of multiple beams of high and low energy ray signals in different directions, wherein the multiple beams of high and low energy ray signals in different directions are scattered by the known material and received by the dual -energy backscatter detector.

**Patentansprüche**

1. Auf Rückstreuungsbildgebung basierendes Prüfsystem, umfassend:

eine Strahlenquelle (110, 210, 310, 420, 610) zum Aussenden von Strahlen zu einem geprüften Objekt;
einen Multi-Energie-Rückstreuungsdetektor (120) zum Empfangen von durch das geprüfte Objekt gestreuten Strahlen und zum Ausgeben von Strahlensignalen, wobei der Multi-Energie-Rückstreuungsdetektor (120) ein Dual-Energie-Rückstreuungsdetektor (220) ist, wobei der Dual-Energie-Rückstreuungsdetektor (220) umfasst:

einen Rückstreuungsdetektor für niedrige Energie (221, 320); und
einen Rückstreuungsdetektor für hohe Energie (222, 330),
wobei der Rückstreuungsdetektor für niedrige Energie (221, 320) und der Rückstreuungsdetektor für hohe Energie (222, 330) eine Vielzahl von Rückstreuungsdetektionsmodulen (620, 630) in unterschiedlichen Positionen und Richtungen umfassen, und

eine Verarbeitungsvorrichtung (130, 230, 350, 430, 640, 830), die mit der Strahlenquelle (110, 210, 310, 420, 610) bzw. dem Multi-Energie-Rückstreuungsdetektor (120) verbunden ist, um die Strahlensignale von dem Multi-Energie-Rückstreuungsdetektor zu empfangen und die Strahlensignale zu verarbeiten, um ein Bild des geprüften Objekts zu erhalten, und wobei das auf Rückstreuungsbildgebung basierende Prüfsystem **dadurch gekennzeichnet ist, dass** jedes der Rückstreuungsdetektionsmodule (620, 630) ringförmig ist und die Vielzahl von Rückstreuungsdetektionsmodulen (620, 630) koaxial angeordnet sind.

2. System nach Anspruch 1, **dadurch gekennzeichnet, dass** der Rückstreuungsdetektor für hohe Energie (222, 330) eine Vielzahl von Rückstreuungsdetektoreinheiten für hohe Energie umfasst, die in einem vorbestimmten Abstand angeordnet sind.

3. System nach Anspruch 1, **dadurch gekennzeichnet, dass** die Strahlenquelle (110, 210, 310, 420, 610) eine Multi-Energie-Strahlenquelle (810) ist, um Strahlen mit unterschiedlichen Energien zu emittieren.

4. System nach Anspruch 3, **dadurch gekennzeichnet, dass** die Strahlenquelle (110, 210, 310, 420, 610) eine Dual-Energie-Strahlenquelle (810) ist, die hochenergetische Strahlen und niederenergetische Strahlen aussendet.

5. System nach einem der Ansprüche 1, **dadurch gekennzeichnet, dass** der Multi-Energie-Rückstreuungsdetektor (120) ein Flachdetektor ist und/oder der Multi-Energie-Rückstreuungsdetektor (120) aus einem Szintillatormaterial besteht.

6. System nach Anspruch 5, **dadurch gekennzeichnet, dass** das Szintillatormaterial ein organischer Polystyrol-Szintillationskristall ist.

7. Auf Rückstreuungsbildgebung basierendes Prüfverfahren, umfassend:

Aussenden von Strahlen durch eine Strahlenquelle auf ein geprüftes Objekt;
Aufspalten von durch das geprüfte Objekt gestreuten Strahlen in niederenergetische Strahlensignale und hochenergetische Strahlensignale von durch das geprüfte Objekt gestreuten Strahlen durch einen Rückstreuungsdetektor für niedrige Energie und einen Rückstreuungsdetektor für hoher Energie, wobei der Rückstreuungsdetektor für niedrige Energie und der Rückstreuungsdetektor für hohe Energie eine Vielzahl von Rückstreuungsdetektionsmodulen in verschiedenen Positionen und Richtungen umfassen,
und
Verarbeiten der von dem Dual-Energie-Rückstreuungsdetektor empfangenen niederenergetischen Strahlensignale und der hochenergetischen Strahlensignale durch eine Verarbeitungsvorrichtung, um ein Bild des geprüften Objekts zu erhalten, wobei das auf Rückstreuungsbildgebung basierende Prüfungsverfahren **dadurch gekennzeichnet ist, dass** jedes der Rückstreuungsdetektionsmodule ringförmig ist und die Vielzahl von Rückstreuungsdetektionsmodulen koaxial angeordnet sind.

8. Verfahren nach Anspruch 7, **dadurch gekennzeichnet, dass** es ferner umfasst: Vergleichen eines Parameters jedes empfangenen hochenergetischen Strahlensignals und niederenergetischen Strahlensignals mit dem entsprechenden Parameter von hochenergetischen Strahlensignalen und niederenergetischen Strahlensignalen in einer Tabelle bekannter Materialdaten durch die Verarbeitungsvorrichtung, um ein Material des geprüften Objekts zu bestimmen,
wobei die Tabelle der bekannten Materialdaten Abbildungsbeziehungen zwischen jedem bekannten Material und einem Parameter von hoch- und niederenergetischen Strahlensignalen enthält, wobei die hoch- und niederenergetischen Strahlensignale von dem bekannten Material gestreut und von dem Dual-Energie-Rückstreuungsdetektor empfangen werden.

9. Verfahren nach Anspruch 7, **dadurch gekennzeichnet, dass** es ferner umfasst:

Erhalten mehrerer Strahlen der hochenergetischen Strahlensignale und mehrerer Strahlen der niederenergetischen Strahlensignale in verschiedenen Richtungen von dem Dual-Energie-Rückstreuungsdetektor durch die Verarbeitungsvorrichtung; und
Erzeugen eines Bildes des geprüften Objekts auf der Grundlage der mehrfachen Strahlen der hochenergetischen Strahlensignale und der mehrfachen Strahlen der niederenergetischen Strahlensignale in den verschiedenen Richtungen.

10. Verfahren nach Anspruch 9, **dadurch gekennzeichnet, dass** es ferner umfasst: Vergleichen von Parametern aller empfangenen mehreren Strahlen der hochenergetischen Strahlensignale und mehreren Strahlen der niederenergetischen Strahlensignale in verschiedenen Richtungen mit entsprechenden Parametern von mehreren Strahlen von hoch- und niederenergetischen Strahlensignalen in verschiedenen Richtungen in der Tabelle bekannter Materialdaten durch die Verarbeitungsvorrichtung, um ein Material des geprüften Objekts zu bestimmen, wobei die Tabelle der bekannten Materialdaten Abbildungsbeziehungen zwischen jedem bekannten Material und Parametern mehrerer Strahlen von hoch- und niederenergetischen Strahlensignalen in verschiedenen Richtungen enthält, wobei die mehreren Strahlen von hoch- und niederenergetischen Strahlensignalen in verschiedenen Richtungen durch das bekannte Material gestreut und durch den Dual-Energie-Rückstreuungsdetektor empfangen werden.

**Revendications**

1. Système d'inspection basé sur l'imagerie par rétrodiffusion, comprenant :

une source de rayons (110, 210, 310, 420, 610) destinée à émettre des rayons vers un objet inspecté ;
un détecteur de rétrodiffusion multi-énergie (120) destiné à recevoir des rayons diffusés par l'objet inspecté et à émettre des signaux de rayons, dans lequel le détecteur de rétrodiffusion multi-énergie (120) est un détecteur de rétrodiffusion à double énergie (220), le détecteur de rétrodiffusion à double énergie (220) comprend :

un détecteur de rétrodiffusion à basse énergie (221, 320) ; et
un détecteur de rétrodiffusion à haute énergie (222, 330), dans lequel le détecteur de rétrodiffusion à basse énergie (221, 320) et le détecteur de rétrodiffusion à haute énergie (222, 330) comprennent une pluralité de modules de détection de rétrodiffusion (620, 630) dans différentes positions et directions, et

un dispositif de traitement (130, 230, 350, 430, 640, 830) connecté à la source de rayons (110, 210, 310, 420, 610) et au détecteur de rétrodiffusion multi-énergie (120), respectivement, destiné à recevoir les signaux de rayons du détecteur de rétrodiffusion multi-énergie, et à traiter les signaux de rayons pour obtenir une image de l'objet inspecté, et moyennant quoi le système d'inspection basé sur l'imagerie par rétrodiffusion est **caractérisé en ce que** chacun des modules de détection par rétrodiffusion (620, 630) est annulaire, et la pluralité de modules de détection de rétrodiffusion (620, 630) sont disposés coaxialement.

**2.** Système selon la revendication 1, **caractérisé en ce que** le détecteur de rétrodiffusion à haute énergie (222, 330) comprend une pluralité d'unités de détection de rétrodiffusion à haute énergie agencées selon un intervalle prédéterminé.

**3.** Système selon la revendication 1, **caractérisé en ce que** la source de rayons (110, 210, 310, 420, 610) est une source de rayons multi-énergie (810), destinée à émettre des rayons présentant des énergies différentes.

**4.** Système selon la revendication 3, **caractérisé en ce que** la source de rayons (110, 210, 310, 420, 610) est une source de rayons à double énergie (810), destinée à émettre des rayons à haute énergie et des rayons à basse énergie.

**5.** Système selon l'une quelconque des revendications 1, **caractérisé en ce que** le détecteur de rétrodiffusion multi-énergie (120) est un détecteur à panneau plat, et/ou le détecteur de rétrodiffusion multi-énergie (120) est composé d'un matériau scintillateur.

**6.** Système selon la revendication 5, **caractérisé en ce que** le matériau scintillateur est un polystyrène cristal à scintillation organique.

**7.** Procédé d'inspection basé sur l'imagerie par rétrodiffusion, comprenant :

l'émission, par une source de rayons, de rayons vers un objet inspecté ;
la division, par un détecteur de rétrodiffusion à basse énergie et un détecteur de rétrodiffusion à haute énergie, de rayons diffusés par l'objet inspecté en signaux de rayons à basse énergie et en signaux de rayons à haute énergie diffusés par l'objet inspecté, dans lequel le détecteur de rétrodiffusion à basse énergie et le détecteur de rétrodiffusion à haute énergie comprennent une pluralité de modules de détection de rétrodiffusion dans différentes positions et directions, et le traitement, par un dispositif de traitement, des signaux de rayons à basse énergie et des signaux de rayons à haute énergie reçus du détecteur de rétrodiffusion à double énergie pour obtenir une image de l'objet inspecté, moyennant quoi le procédé d'inspection basé sur l'imagerie par rétrodiffusion est **caractérisé par le fait que** chacun des modules de détection de rétrodiffusion est annulaire, et la pluralité de modules de détection de rétrodiffusion sont disposés coaxialement.

**8.** Procédé selon la revendication 7, **caractérisé en ce qu'**il comprend en outre :

la comparaison, par le dispositif de traitement, d'un paramètre de chaque signal de rayon à haute énergie et signal de rayon à basse énergie reçu à un paramètre correspondant de signaux de rayon à haute énergie et de signaux de rayon à basse énergie dans un tableau de données de matériau connu, pour déterminer un matériau de l'objet inspecté,
dans lequel le tableau de données de matériau connu contient des relations de correspondance entre chaque matériau connu et un paramètre de signaux de rayons à haute et basse énergie, dans lequel les signaux de rayons à haute et basse énergie sont diffusés par le matériau connu et reçus par le détecteur de rétrodiffusion à double énergie.

**9.** Procédé selon la revendication 7, **caractérisé en ce qu'**il comprend en outre :

l'obtention, par le dispositif de traitement, de multiples faisceaux des signaux de rayons à haute énergie et de multiples faisceaux des signaux de rayons à basse énergie dans différentes directions, en provenance du détecteur de rétrodiffusion à double énergie ; et
la génération d'une image de l'objet inspecté sur la base des multiples faisceaux des signaux de rayons à haute énergie et des multiples faisceaux des signaux de rayons à basse énergie dans les différentes directions.

**10.** Procédé selon la revendication 9, **caractérisé en ce qu'**il comprend en outre :

la comparaison, par le dispositif de traitement, de paramètres de chaque faisceau multiple reçu des signaux de rayons à haute énergie et des multiples faisceaux des signaux de rayons à basse énergie dans différentes directions avec des paramètres correspondants de faisceaux multiples de signaux de rayons à haute et basse énergie dans différentes directions dans le tableau de données de matériau connu, pour déterminer un matériau de l'objet inspecté,
dans lequel le tableau de données de matériau connu contient des relations de correspondance entre chaque matériau connu et des paramètres de multiples faisceaux de signaux de rayons à haute et basse énergie dans différentes directions, dans lequel les multiples faisceaux de signaux de rayons à haute et basse énergie dans différentes directions sont diffusés par le matériau connu et reçus par le détecteur de rétrodiffusion à double énergie.

110

120

| ray source | | multi-energy backscatter detector |

130

| processing device |

Fig.1

221

223

222

210

220

230

processing device

Fig.2:

Fig.3

Fig.4

410

420

430

processing device

Fig.5

610

620

640

630

processing
device

Fig.6

610
620
630

Fig.7

830

820

processing device

810

Fig.8

910

emitting rays to an inspected object from a ray source

920

obtaining ray signals having different energies and the ray signals are scattered by the inspected object and received by a multi-energy backscatter detector

930

generating an image of the inspected object based on the ray signals having different energies

Fig.9

High energy

(i, j)

low energy

Fig.10

obtaining ray signals in different directions which are scattered by the inspected object and received by a multi-energy backscatter detector

1110

generating an image of the inspected object based on the ray signals in different directions

1120

Fig.11

C

(i, j)

B

Fig.12

Direction 2

(i, j)

Direction 1

Fig.13

| emitting rays having different energies to an inspected object from a ray source | 1410 |
|---|---|

| obtaining ray signals with different energies which are scattered by the inspected object and received by a multi-energy backscatter detector | 1420 |
|---|---|

| generating an image of the inspected object based on the ray signals having different energies | 1430 |
|---|---|

Fig.14

emitting rays to an inspected object from a ray source

1510

obtaining ray signals in different directions which are scattered by the inspected object and received by a backscatter detector

1520

generating an image of the inspected object based on the ray signals in different directions

1530

Fig.15

1620

1630

1610

Fig.16

1740

1730

1720

1710

1730

1740

Fig.17

**EP 3 239 699 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012201356 A1